# EUROPEAN PATENT SPECIFICATION

(11) **EP 2 863 571 B1**
(45) Date of publication and mention of the grant of the patent: **12.02.2020**
(21) Application number: 13784987.3
(22) Date of filing: 02.05.2013
(51) Int. Cl.: H04L 5/00, H04L 1/18, H04L 5/14, H04W 72/04

(54) **METHOD AND APPARATUS FOR PERFORMING HARQ BASED ON DYNAMIC CHANGE OF WIRELESS RESOURCES IN WIRELESS COMMUNICATION SYSTEM**
VERFAHREN UND VORRICHTUNG ZUR HARQ-DURCHFÜHRUNG AUF BASIS EINER DYNAMISCHER ÄNDERUNG DRAHTLOSER RESSOURCEN IN EINEM DRAHTLOSEN KOMMUNIKATIONSSYSTEM
PROCÉDÉ ET APPAREIL POUR EXÉCUTER UNE REQUÊTE HARQ SUR LA BASE D'UN CHANGEMENT DYNAMIQUE DE RESSOURCES SANS FIL DANS UN SYSTÈME DE COMMUNICATION SANS FIL

(30) Priority: 03.05.2012 US 201261641902 P; 06.09.2012 US 201261697788 P; 04.01.2013 US 201361748766 P
(43) Date of publication of application: 22.04.2015
(73) Proprietor: LG Electronics Inc., Yeongdeungpo-gu Seoul 150-721 (KR)
(72) Inventor: SEO, Hanbyul, Anyang-si Gyeonggi-do 431-080 (KR); KIM, Myoungseob, Anyang-si Gyeonggi-do 431-080 (KR); LEE, Seungmin, Anyang-si Gyeonggi-do 431-080 (KR); YANG, Suckchel, Anyang-si Gyeonggi-do 431-080 (KR)
(74) Representative: Katérle, Axel
(86) International application number: PCT/KR2013/003798
(87) International publication number: WO 2013/165184

(56) References cited:
- WO-A1-2009/060164
- WO-A1-2010/138925
- KR-A- 20100 021 475
- KR-A- 20100 038 129
- US-A1- 2007 281 613
- ITRI: "Discussions on UL-DL TDD configurations for inter-band CA", 3GPP DRAFT; R1-113371, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 5 October 2011 (2011-10-05), XP050538536, [retrieved on 2011-10-05]
- LG ELECTRONICS: "Overall issues on half-duplex operation based TDD CA with different UL-DL configurations", 3GPP DRAFT; R1-120421 HD BASED DIFFERENT TDD CA (FINAL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562910, [retrieved on 2012-01-31]
- CATT: "TDD Inter-band Carrier Aggregation", 3GPP DRAFT; R1-112106, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537280, [retrieved on 2011-08-16]
- INTEL CORPORATION: "DRX operation for different UL/DL configuration in TDD", 3GPP DRAFT; R2-121726_DRX IN DL_UL_CONFIG_TDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20120326 - 20120330, 20 March 2012 (2012-03-20), XP050606425, [retrieved on 2012-03-20]

## Description

### [Technical Field]

The present invention relates to a wireless communication system and, more particularly, to a method for performing hybrid automatic repeat and request (HARQ) based on dynamic change of radio resources in a wireless communication system, and an apparatus therefor.

### [Background Art]

As an example of a wireless communication system to which the present invention is applicable, a 3^{rd} Generation Partnership Project (3GPP) Long Term Evolution (LTE) communication system will be schematically described.

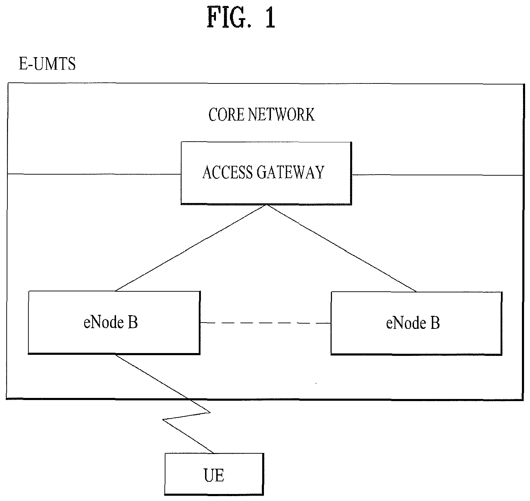

FIG. 1 is a diagram showing a network structure of an Evolved Universal Mobile Telecommunications System (E-UMTS) as a wireless communication system. The E-UMTS is an evolved form of the UMTS and has been standardized in the 3GPP. Generally, the E-UMTS may be called a Long Term Evolution (LTE) system. For details of the technical specifications of the UMTS and E-UMTS, refer to Release 7 and Release 8 of "3^{rd} Generation Partnership Project; Technical Specification Group Radio Access Network".

Referring to FIG. 1, the E-UMTS mainly includes a User Equipment (UE), base stations (or eNBs or eNode Bs), and an Access Gateway (AG) which is located at an end of a network (E-UTRAN) and which is connected to an external network. Generally, an eNB can simultaneously transmit multiple data streams for a broadcast service, a multicast service and/or a unicast service.

One or more cells may exist per eNB. The cell is set to use a bandwidth such as 1.25, 2.5, 5, 10, 15 or 20 MHz to provide a downlink or uplink transmission service to several UEs. Different cells may be set to provide different bandwidths. The eNB controls data transmission or reception of a plurality of UEs. The eNB transmits downlink (DL) scheduling information of DL data so as to inform a corresponding UE of time/frequency domain in which data is transmitted, coding, data size, and Hybrid Automatic Repeat and reQest (HARQ)-related information. In addition, the eNB transmits uplink (UL) scheduling information of UL data to a corresponding UE so as to inform the UE of a time/frequency domain which may be used by the UE, coding, data size and HARQ-related information. An interface for transmitting user traffic or control traffic can be used between eNBs. A Core Network (CN) may include an AG, a network node for user registration of the UE, etc. The AG manages mobility of a UE on a Tracking Area (TA) basis. One TA includes a plurality of cells.

Although wireless communication technology has been developed up to Long Term Evolution (LTE) based on Wideband Code Division Multiple Access (WCDMA), the demands and the expectations of users and providers continue to increase. In addition, since other radio access technologies have been continuously developed, new technology evolution is required to secure high competitiveness in the future. Decrease in cost per bit, increase in service availability, flexible use of a frequency band, simple structure, open interface, suitable User Equipment (UE) power consumption and the like are required.

ITRI: "Discussions on UL-DL TDD configurations for inter-band CA", 3GPP Draft; Rl-113371, discloses proposals for solving problems in relation with Uplink (UL)-Downlink (DL) Time-Division Duplex (TDD) configurations for inter-band Carrier Aggregation (CA).

### [Disclosure]

### [Technical Problem]

An object of the present invention devised to solve the problem lies in a method for performing hybrid automatic repeat and request (HARQ) based on dynamic change of radio resources in a wireless communication system, and an apparatus therefor.

### [Technical Solution]

The above object is achieved by the claimed subject-matter according to the independent claims. Advantageous embodiments are defined by the dependent claims. The embodiments which do not fall within the scope of the claims are to be interpreted as examples useful for understanding the invention.

The object of the present invention can be achieved by providing a method for transmitting and receiving a signal via a predetermined carrier between a user equipment and a base station in a time division duplex (TDD) communication system, including receiving information about dynamically changeable uplink/downlink configurations from the base station; selecting a representative uplink/downlink configuration among the uplink/downlink configurations, and performing a hybrid automatic repeat and request (HARQ) operation according to the representative uplink/downlink configuration.

Te dynamically changeable uplink/downlink configurations may be determined based on switching periodicity of each uplink/downlink configuration and a default uplink/downlink configuration indicated via system information.

The performing the HARQ operation may include performing reception of a downlink data channel and transmission of uplink acknowledgement (ACK)/negative ACK (NACK) for the downlink data channel, based on the representative uplink/downlink configuration. The performing the HARQ operation may include performing reception of uplink grant and transmission of an uplink data channel based on the uplink grant, based on the representative uplink/downlink configuration, and performing reception of a response signal to the uplink data channel and retransmission of the uplink data channel according to reception of the response signal.

HARQ timings of the representative uplink/downlink configuration may be determined based on HARQ timings of a default uplink/downlink configuration indicated via system information.

If scheduling information of the predetermined carrier is received via another carrier, the representative uplink/downlink configuration of the predetermined carrier may be regarded as a representative uplink/downlink configuration of the other carrier.

In another aspect of the present invention, provided herein is a user equipment (UE) apparatus in a time division duplex (TDD) communication system, including a wireless communication module configured to transmit and receive a signal to and from a base station, and a processor configured to process the signal, wherein the processor receives information about dynamically changeable uplink/downlink configurations from the base station, selects a representative uplink/downlink configuration among the uplink/downlink configurations and performs a hybrid automatic repeat and request (HARQ) operation according to the representative uplink/downlink configuration.

### [Advantageous Effects]

According to embodiments of the present invention, a UE and a base station (eNB) can efficiently perform a HARQ operation while dynamically changing ratio resources in a wireless communication system.

It will be appreciated by persons skilled in the art that that the effects that can be achieved through the present invention are not limited to what has been particularly described hereinabove and other advantages of the present invention will be more clearly understood from the following detailed description.

### [Description of Drawings]

FIG. 1 is a diagram showing a network structure of an Evolved Universal Mobile Telecommunications System (E-UMTS) as an example of a wireless communication system.
FIG. 2 is a diagram showing a control plane and a user plane of a radio interface protocol architecture between a User Equipment (UE) and an Evolved Universal Terrestrial Radio Access Network (E-UTRAN) based on a 3^{rd} Generation Partnership Project (3GPP) radio access network standard.
FIG. 3 is a diagram showing physical channels used in a 3GPP system and a general signal transmission method using the same.
FIG. 4 is a diagram showing the structure of a downlink radio frame used in a Long Term Evolution (LTE) system.
FIG. 5 is a diagram showing the structure of an uplink subframe used in an LTE system.
FIG. 6 is a diagram showing the structure of a radio frame used in an LTE TDD system.
FIG. 7 is a diagram showing an uplink ACK/NACK transmission operation in an E-TDD system according to an embodiment of the present invention.
FIG. 8 is a diagram showing a PUSCH scheduling operation in an E-TDD system according to an embodiment of the present invention.
FIG. 9 is a diagram showing a transmission timeline of a PHICH or retransmission grant in an E-TDD system according to an embodiment of the present invention.
FIG. 10 is a block diagram of a communication apparatus according to one embodiment of the present invention.

### [Best Mode]

The configuration, operation and other features of the present invention will be understood by the embodiments of the present invention described with reference to the accompanying drawings. The following embodiments are examples of applying the technical features of the present invention to a 3^{rd} Generation Partnership Project (3GPP) system.

Although, for convenience, the embodiments of the present invention are described using the LTE system and the LTE-A system in the present specification, the embodiments of the present invention are applicable to any communication system corresponding to the above definition. In addition, although the embodiments of the present invention are described based on a Frequency Division Duplex (FDD) scheme in the present specification, the embodiments of the present invention may be easily modified and applied to a Half-Duplex FDD (H-FDD) scheme or a Time Division Duplex (TDD) scheme.

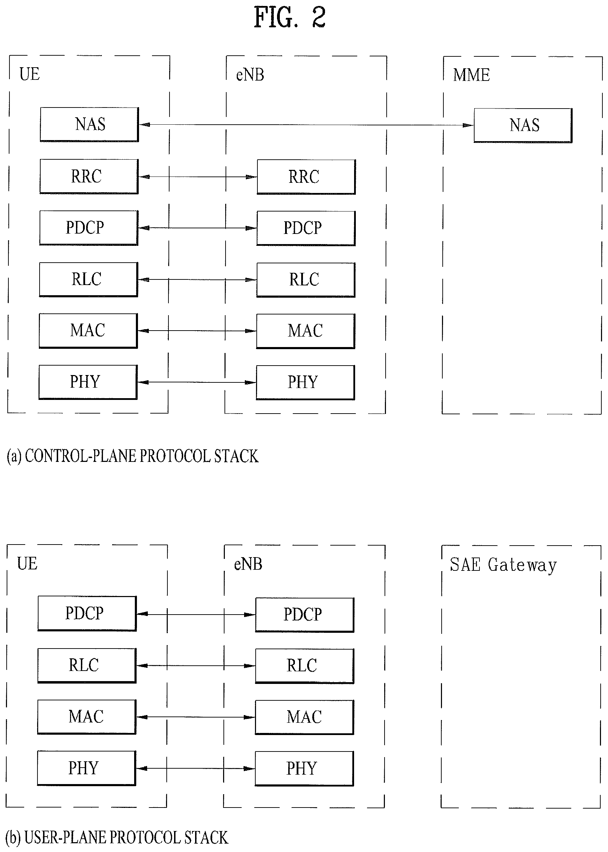

FIG. 2 shows a control plane and a user plane of a radio interface protocol between a UE and an Evolved Universal Terrestrial Radio Access Network (E-UTRAN) based on a 3GPP radio access network standard. The control plane refers to a path used for transmitting control messages used for managing a call between the UE and the network. The user plane refers to a path used for transmitting data generated in an application layer, e.g., voice data or Internet packet data.

A physical (PHY) layer of a first layer provides an information transfer service to a higher layer using a physical channel. The PHY layer is connected to a Medium Access Control (MAC) layer located on a higher layer via a transport channel. Data is transported between the MAC layer and the PHY layer via the transport channel. Data is also transported between a physical layer of a transmitting side and a physical layer of a receiving side via a physical channel. The physical channel uses a time and a frequency as radio resources. More specifically, the physical channel is modulated using an Orthogonal Frequency Division Multiple Access (OFDMA) scheme in downlink and is modulated using a Single-Carrier Frequency Division Multiple Access (SC-FDMA) scheme in uplink.

A Medium Access Control (MAC) layer of a second layer provides a service to a Radio Link Control (RLC) layer of a higher layer via a logical channel. The RLC layer of the second layer supports reliable data transmission. The function of the RLC layer may be implemented by a functional block within the MAC. A Packet Data Convergence Protocol (PDCP) layer of the second layer performs a header compression function to reduce unnecessary control information for efficient transmission of an Internet Protocol (IP) packet such as an IPv4 packet or an IPv6 packet in a radio interface having a relatively small bandwidth.

A Radio Resource Control (RRC) layer located at the bottom of a third layer is defined only in the control plane and is responsible for control of logical, transport, and physical channels in association with configuration, re-configuration, and release of Radio Bearers (RBs). The RB is a service that the second layer provides for data communication between the UE and the network. To accomplish this, the RRC layer of the UE and the RRC layer of the network exchange RRC messages. The UE is in an RRC connected mode if an RRC connection has been established between the RRC layer of the radio network and the RRC layer of the UE. Otherwise, the UE is in an RRC idle mode. A Non-Access Stratum (NAS) layer located above the RRC layer performs functions such as session management and mobility management.

One cell of the eNB is set to use a bandwidth such as 1.4, 3, 5, 10, 15 or 20 MHz to provide a downlink or uplink transmission service to UEs. Different cells may be set to provide different bandwidths.

Downlink transport channels for transmission of data from the network to the UE include a Broadcast Channel (BCH) for transmission of system information, a Paging Channel (PCH) for transmission of paging messages, and a downlink Shared Channel (SCH) for transmission of user traffic or control messages. Traffic or control messages of a downlink multicast or broadcast service may be transmitted through a downlink SCH and may also be transmitted through a downlink multicast channel (MCH). Uplink transport channels for transmission of data from the UE to the network include a Random Access Channel (RACH) for transmission of initial control messages and an uplink SCH for transmission of user traffic or control messages. Logical channels, which are located above the transport channels and are mapped to the transport channels, include a Broadcast Control Channel (BCCH), a Paging Control Channel (PCCH), a Common Control Channel (CCCH), a Multicast Control Channel (MCCH), and a Multicast Traffic Channel (MTCH).

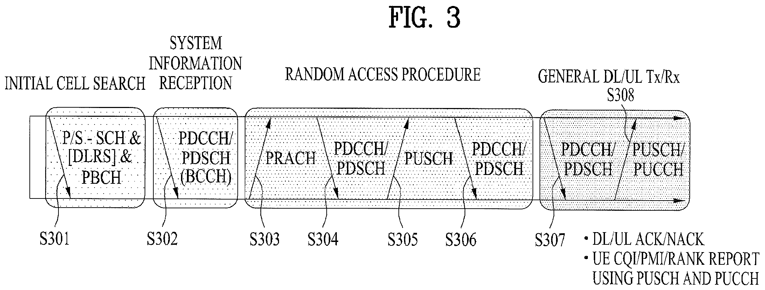

FIG. 3 is a diagram showing physical channels used in a 3GPP system and a general signal transmission method using the same.

A UE performs an initial cell search operation such as synchronization with an eNB when power is turned on or the UE enters a new cell (S301). The UE may receive a Primary Synchronization Channel (P-SCH) and a Secondary Synchronization Channel (S-SCH) from the eNB, perform synchronization with the eNB, and acquire information such as a cell ID. Thereafter, the UE may receive a physical broadcast channel from the eNB so as to acquire broadcast information within the cell. Meanwhile, the UE may receive a Downlink Reference Signal (DL RS) so as to confirm a downlink channel state in the initial cell search step.

The UE, which has completed the initial cell search, may receive a Physical Downlink Control Channel (PDCCH) and a Physical Downlink Shared Channel (PDSCH) according to information included in the PDCCH so as to acquire more detailed system information (S302).

Meanwhile, if the eNB is initially accessed or radio resources for signal transmission are not present, the UE may perform a Random Access Procedure (RACH) (step S303 to S306) with respect to the eNB. In this case, the UE may transmit a specific sequence through a Physical Random Access Channel (PRACH) as a preamble (S303 and S305), and receive a response message of the preamble through the PDCCH and the PDSCH corresponding thereto (S304 and S306). In the case of contention-based RACH, a contention resolution procedure may be further performed.

The UE, which has performed the above procedures, may perform PDCCH/PDSCH reception (S307) and Physical Uplink Shared Channel PUSCH)/Physical Uplink Control Channel (PUCCH) transmission (S308) as a general uplink/downlink signal transmission procedure. In particular, the UE receives downlink control information (DCI) through a PDCCH. Here, the DCI includes control information such as resource allocation information of the UE and the format thereof differs according to the use purpose.

The control information transmitted from the UE to the eNB in uplink or transmitted from the eNB to the UE in downlink includes a downlink/uplink ACK/NACK signal, a Channel Quality Indicator (CQI), a Precoding Matrix Index (PMI), a Rank Indicator (RI), and the like. In the case of the 3GPP LTE system, the UE may transmit the control information such as CQI/PMI/RI through the PUSCH and/or the PUCCH.

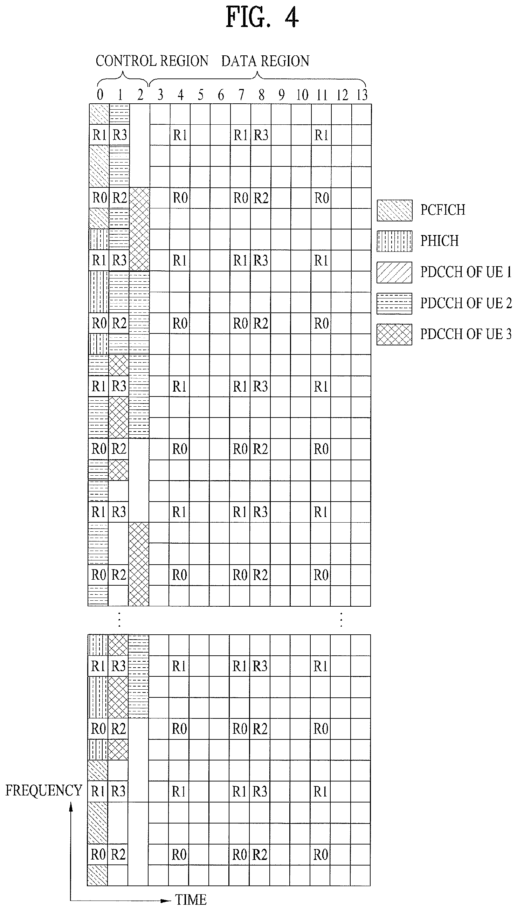

FIG. 4 is a diagram showing a control channel included in a control region of one subframe in a downlink radio frame.

Referring to FIG. 4, a subframe includes 14 OFDM symbols. The first to third OFDM symbols are used as a control region and the remaining 13 to 11 OFDM symbols are used as a data region, according to subframe configuration. In FIG. 4, Rl to R4 denote reference signals (RS) or pilot signals for antennas 0 to 3. The RS is fixed to a constant pattern within a subframe regardless of the control region and the data region. A control channel is allocated to resources, to which the RS is not allocated, in the control region, and a traffic channel is also allocated to resources, to which the RS is not allocated, in the control region. Examples of the control channel allocated to the control region include a Physical Control Format Indicator Channel (PCFICH), a Physical Hybrid-ARQ Indicator Channel (PHICH), a Physical Downlink Control Channel (PDCCH), etc.

The Physical Control Format Indicator Channel (PCFICH) informs the UE of the number of OFDM symbols used for the PDCCH per subframe. The PCFICH is located at a first OFDM symbol and is configured prior to the PHICH and the PDCCH. The PCFICH includes four Resource Element Groups (REGs) and the REGs are dispersed in the control region based on a cell identity (ID). One REG includes four resource elements (REs). The PCFICH has a value of 1 to 3 or 2 to 4 according to bandwidth and is modulated using a Quadrature Phase Shift Keying (QPSK) scheme.

The Physical Hybrid-ARQ Indicator Channel (PHICH) is used to carry HARQ ACK/NACK for uplink transmission. That is, the PHICH refers to a channel via which DL ACK/NACK information for uplink HARQ is transmitted. The PHICH includes one REG and is scrambled on a cell-specific basis. ACK/NACK is indicated by one bit and is modulated using a binary phase shift keying (BPSK) scheme. The modulated ACK/NACK is repeatedly spread with a spreading factor (SF) of 2 or 4. A plurality of PHICHs mapped to the same resources configures a PHICH group. The number of PHICHs multiplexed in the PHICH group is determined according to the number of spreading codes. The PHICH (group) is repeated three times in order to obtain diversity gain in a frequency region and/or time region.

The Physical Downlink Control Channel (PDCCH) is allocated to the first n OFDM symbols of a subframe. Here, n is an integer of 1 or more and is indicated by a PCFICH. The PDCCH includes one or more Control Channel Elements (CCEs). The PDCCH informs each UE or a UE group of information associated with resource allocation of a Paging Channel (PCH) and a Downlink-Shared Channel (DL-SCH), both of which are transport channels, uplink scheduling grant, HARQ information, etc. The paging channel (PCH) and the downlink-shared channel (DL-SCH) are transmitted through a PDSCH. Accordingly, the eNB and the UE transmit and receive data through the PDSCH except for specific control information or specific service data.

Information indicating to which UE (one or a plurality of UEs) data of the PDSCH is transmitted and information indicating how the UEs receive and decode the PDSCH data are transmitted in a state of being included in the PDCCH. For example, it is assumed that a specific PDCCH is CRC-masked with a Radio Network Temporary Identity (RNTI) "A", and information about data transmitted using a radio resource (e.g., frequency location) "B" and transmission format information (e.g., transmission block size, modulation scheme, coding information, or the like) "C" is transmitted via a specific subframe. In this case, one or more UEs located within a cell monitor a PDCCH using its own RNTI information, and if one or more UEs having "A" RNTI are present, the UEs receive the PDCCH and receive the PDSCH indicated by "B" and "C" through the information about the received PDCCH.

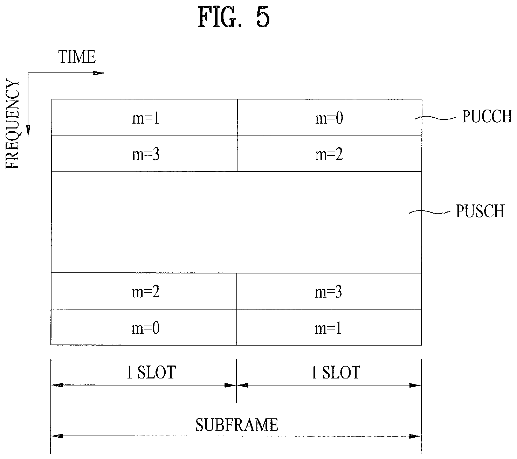

FIG. 5 is a diagram showing the structure of an uplink subframe used in an LTE system.

Referring to FIG. 5, an uplink subframe may be divided into a region to which a Physical Uplink Control Channel (PUCCH) carrying uplink control information is allocated and a region to which a Physical Uplink Shared Channel (PUSCH) carrying user data is allocated. A middle portion of the subframe is allocated to the PUSCH and both sides of a data region in a frequency domain are allocated to the PUCCH. Uplink control information transmitted on the PUCCH includes an ACK/NACK signal used for HARQ, a Channel Quality Indicator (CQI) indicating a downlink channel status, a rank indicator (RI) for MIMO, a scheduling request (SR) which is an uplink radio resource allocation request, etc. The PUCCH for one UE uses one resource block occupying different frequencies in slots within the subframe. Two slots use different resource blocks (or subcarriers) within the subframe. That is, two resource blocks allocated to the PUCCH are frequency-hopped in a slot boundary. FIG. 5 shows the case in which a PUCCH having m=0, a PUCCH having m=1, a PUCCH having m=2, and a PUCCH having m=3 are allocated to the subframe.

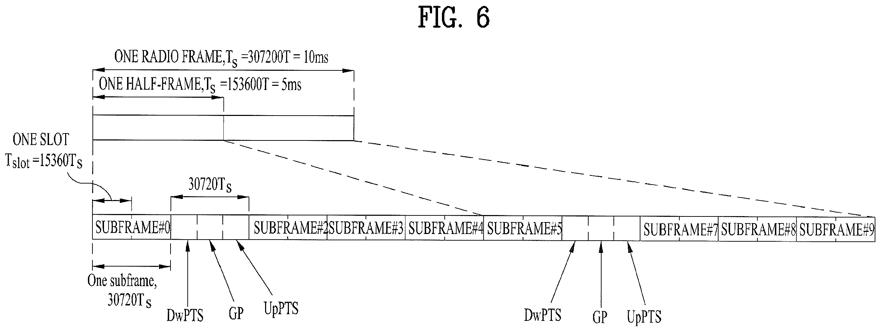

FIG. 6 is a diagram showing the structure of a radio frame in an LTE TDD system. In an LTE TDD system, the radio frame includes two half frames, each of which includes four normal subframes including two slots and a special subframe including a downlink pilot time slot (DwPTS), a guard period (GP), and an uplink pilot time slot (UpPTS).

In the special subframe, the DwPTS is used for initial cell search, synchronization and channel estimation at a user equipment. The UpPTS is used for channel estimation of a base station and uplink transmission synchronization of the user equipment. That is, the DwPTS is used for downlink transmission and the UpPTS is used for uplink transmission. In particular, the UpPTS is used for PRACH preamble or SRS transmission. The guard period is used to remove interference occurring in uplink due to multi-path delay of a downlink signal between uplink and downlink.

The special subframe is currently defined as shown in Table 1 below in the 3GPP standard. Table 1 shows the DwPTS and the UpPTS in case of *Tₛ* =1/(15000×2048). The remaining region is configured as a guard period.

**Table 1**

| **Special subframe configuration** | **Normal cyclic prefix in downlink** | | | **Extended cyclic prefix in downlink** | | |
|---|---|---|---|---|---|---|
| | **DwPTS** | **UpPTS** | | **DwPTS** | **UpPTS** | |
| | | **Normal cyclic prefix in uplink** | **Extended cyclic prefix in uplink** | | **Normal cyclic prefix in uplink** | **Extended cyclic prefix in uplink** |
| 0 | 6592.*T*ₛ | 2192·*T*ₛ | 2560·*T*ₛ | 7680·*T*ₛ | 2192·*T*ₛ | 2560·*T*ₛ |
| 1 | 19760·*T*ₛ | | | 20480·*T*ₛ | | |
| 2 | 21952·*T*ₛ | | | 23040·*T*ₛ | | |
| 3 | 24144·*T*ₛ | | | 25600·*T*ₛ | | |
| 4 | 26336·*T*ₛ | | | 7680·*T*ₛ | 4384·*T*ₛ | 5120·*T*ₛ |
| 5 | 6592·*T*ₛ | 4384·*T*ₛ | 5120·*T*ₛ | 20480·*T*ₛ | | |
| 6 | 19760·*T*ₛ | | | 23040·*T*ₛ | | |
| 7 | 21952·*T*ₛ | | | - | - | - |
| 8 | 24144·*T*ₛ | | | - | - | - |

In the LTE TDD system, an uplink/downlink (UL/DL) configuration is shown in Table 2 below.

**Table 2**

| **Uplink-downlink configuration** | **Downlink-to-Uplink Switch-point periodicity** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In Table 2 above, D denotes a downlink subframe, U denotes an uplink subframe and S denotes the special subframe. Table 2 above shows a downlink-to-uplink switch-point periodicity in the UL/DL configuration in each system.

Table 3 below shows an uplink subframe number (index) for transmitting uplink ACK/NACK for a downlink signal by a UE in a TDD system based on a 3GPP LTE system.

**Table 3**

| **Uplink-downlink configuration** | **Subframe number** | | | | | | | | | |
|---|---|---|---|---|---|---|---|---|---|---|
| | **0** | **1** | **2** | **3** | **4** | **5** | **6** | **7** | **8** | **9** |
| 0 | 4 | 7 | - | - | - | 9 | 2 | - | - | - |
| 1 | 7 | 7 | - | - | 8 | 2 | 2 | - | - | 3 |
| 2 | 7 | 7 | - | 7 | 2 | 2 | 2 | - | 2 | 7 |
| 3 | 4 | 2 | - | - | - | 2 | 2 | 3 | 3 | 4 |
| 4 | 2 | 2 | - | - | 2 | 2 | 3 | 3 | 3 | 3 |
| 5 | 2 | 2 | - | 2 | 2 | 2 | 2 | 2 | 2 | 2 |
| 6 | 7 | 8 | - | - | - | 2 | 3 | - | - | 4 |

In particular, in Table 3, "-" denotes that a subframe is configured as an uplink subframe and numeral allocated to each subframe number denotes an uplink subframe index, that is, an uplink subframe index linked to a downlink subframe.

Hereinafter, a carrier aggregation (CA) scheme will be described.

Carrier aggregation refers to a method of, at a UE, utilizing a plurality of frequency blocks or cells (in a logical sense) composed of uplink resources (or component carriers) and/or downlink resources (or component carriers) as a large logical frequency bandwidth in order to use a wider frequency bandwidth in a wireless communication system. Hereinafter, for convenience of description, the term "component carrier" will be used.

An entire system bandwidth (BW) is a logical bandwidth having a maximum bandwidth of 100 MHz. The entire system bandwidth includes five component carriers (CCs) and each CC has a maximum bandwidth of 20 MHz. The CC includes one or more physically contiguous subcarriers. CCs may have the same bandwidth or different bandwidths. Although CCs are shown as being adjacent to each other in the frequency domain in the logical concept, the CCs may be physically adjacent to or separated from each other.

Different center frequencies may be used for the CCs or one common center frequency may be used for physically adjacent CCs. For example, if it is assumed that all CCs are physically adjacent, a center frequency A may be used. If it is assumed that CCs are not physically adjacent, a center frequency A, a center frequency B and the like may be used for the respective CCs.

In the present specification, the CC may correspond to a system bandwidth of a legacy system. By defining the CC based on the legacy system, it is possible to provide backward compatibility and to facilitate system design in a radio communication environment in which an evolved UE and a legacy UE coexist. For example, if the LTE-A system supports carrier aggregation, each CC may correspond to the system bandwidth of the LTE system. In this case, the CC may have any one bandwidth such as 1.25, 2.5, 5, 10 or 20 MHz.

In the case in which the entire system bandwidth is extended by carrier aggregation, a frequency bandwidth used for communication with each UE is defined in CC units. A UE A may use 100 MHz which is the entire system bandwidth and perform communication using all five CCs. Each of UEs B₁ to B₅ may only use a bandwidth of 20 MHz and perform communication using one CC. Each of UEs C₁ and C₂ may use a bandwidth of 40 MHz and perform communication using two CCs. The two CCs may or may not be logically or physically adjacent. The UE C₁ uses two non-adjacent CCs and the UE C₂ uses two adjacent CCs.

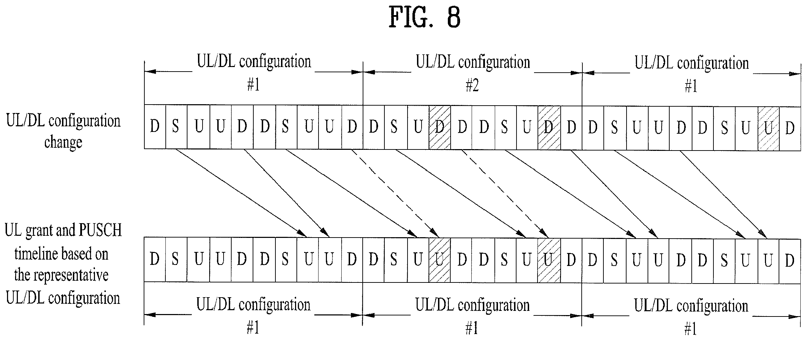

While one downlink CC and one uplink component are used in the LTE system, several component carriers may be used in the LTE-A system as shown in FIG. 8. At this time, a method of scheduling a data channel by a control channel may be divided into a linked carrier scheduling method and a cross carrier scheduling method.

More specifically, in the linked carrier scheduling method, similarly to the conventional LTE system using a single CC, a control channel transmitted via a specific CC schedules only a data channel via the specific CC.

In contrast, in the cross carrier scheduling method, a control channel transmitted via a primary CC using a carrier indicator field (CIF) schedules a data channel transmitted via the primary CC or another CC.

As described above, a TDD system divides all subframes into uplink subframes and downlink subframes and respectively uses the uplink subframes and the downlink subframes for uplink transmission of a UE and downlink transmission of an eNB. A UE is generally informed of such an uplink/downlink configuration as a part of system information and the configuration shown in Table 2 above may be provided. Of course, in addition to the uplink/downlink configuration of Table 2, a new uplink/downlink configuration may be further provided.

Even in a TDD cell, to which a specific uplink/downlink configuration is applied, the number of downlink subframes and the number of uplink subframes are preferably changed with time. This is because downlink traffic and uplink traffic are not fixed according to unit time. Therefore, an eNB may dynamically change an uplink/downlink configuration for a TDD system at every point of time. That is, the eNB may dynamically change whether each subframe is used for downlink or uplink. Hereinafter, a TDD system to which such an operation is applied is referred to as an enhanced-TDD (E-TDD) system.

In the present invention, a HARQ operation which may be effectively used when an eNB performs an E-TDD operation is proposed. The operation of the present invention described below is applicable not only to a carrier aggregation scheme in which two or more component carriers are aggregated and an E-TDD operation performed by an eNB in one carrier (or SCell) but also to an E-TDD operation performed in a single carrier without applying a carrier aggregation scheme.

In a conventional LTE system, a HARQ operation was determined by an uplink/downlink configuration of a cell. That is, if an uplink/downlink configuration is set by system information, a HARQ operation scheme for the uplink/downlink configuration is automatically determined. The HARQ operation includes an operation for uplink ACK/NACK for a PDSCH transmitted by an eNB, an operation for monitoring uplink grant or a PHICH including a retransmission command of a PUSCH transmitted by a UE, an operation for performing PUSCH transmission instructed by an eNB, etc.

In E-TDD in which an uplink/downlink configuration is dynamically changed, it is difficult to apply a conventional HARQ operation. In particular, it is more difficult to apply a conventional HARQ operation to a method for indirectly changing an uplink/downlink configuration depending on whether a scheduling message is transmitted in a preset uplink/downlink configuration, rather than a method for changing an uplink/downlink configuration at every point of time and explicitly indicating the changed uplink/downlink configuration.

Accordingly, in order to perform a HARQ operation in an E-TDD system, in the present invention, a range of a changeable uplink/downlink configuration in a component carrier is predefined and a representative uplink/downlink configuration which may include the changeable uplink/downlink configuration is selected when a specific HARQ operation is performed.

For example, in an operation for uplink ACK/NACK for a PDSCH, the number of uplink subframes is relatively less than the number of downlink subframes and thus transmission opportunities of ACK/NACK may be reduced. In other words, although a specific subframe is regarded as an uplink subframe and uplink ACK/NACK is scheduled to be transmitted in this subframe, if this subframe is dynamically used as a downlink subframe, a transmission opportunity of uplink ACK/NACK may be missed.

If the operation of the present invention is applied in this situation, a specific uplink/downlink configuration, in which only subframes corresponding to an intersection of uplink subframes in all uplink/downlink configurations changeable by an E-TDD operation are configured as uplink subframes, is configured as a representative uplink/downlink configuration and uplink ACK/NACK is transmitted in the representative uplink/downlink configuration. An eNB may inform UEs of candidates of an uplink/downlink configuration selectable by the E-TDD operation.

From the other viewpoints, an uplink/downlink configuration, in which only subframes corresponding to a union of downlink subframes in all uplink/downlink configurations changeable by an E-TDD operation are configured as downlink subframes, is configured as a representative uplink/downlink configuration and uplink ACK/NACK is transmitted on uplink subframes determined according to the representative uplink/downlink configuration.

If an uplink/downlink configuration having an uplink subframe set accurately corresponding to the intersection of the uplink subframes is not present, an uplink/downlink configuration having the most uplink subframes among uplink/downlink configurations having uplink subframes as a subset of the intersection may be selected as a representative uplink/downlink configuration.

Similarly, if an uplink/downlink configuration having a downlink subframe set accurately corresponding to the union of the downlink subframes is not present, an uplink/downlink configuration having the most downlink subframes among uplink/downlink configurations having downlink subframes as a subset of the union may be selected as a representative uplink/downlink configuration.

Although an arbitrary uplink/downlink configuration among uplink/downlink configurations changeable by an E-TDD operation is selected as a representative uplink/downlink configuration, a subframe configured as an uplink subframe in the representative uplink/downlink configuration is an uplink subframe in all uplink/downlink configurations and thus a transmission opportunity of uplink ACK/NACK is guaranteed. Accordingly, if a representative uplink/downlink configuration is selected and is regarded as an uplink/downlink configuration of a component carrier used for an E-TDD operation to perform a HARQ operation, the HARQ operation can be effectively performed.

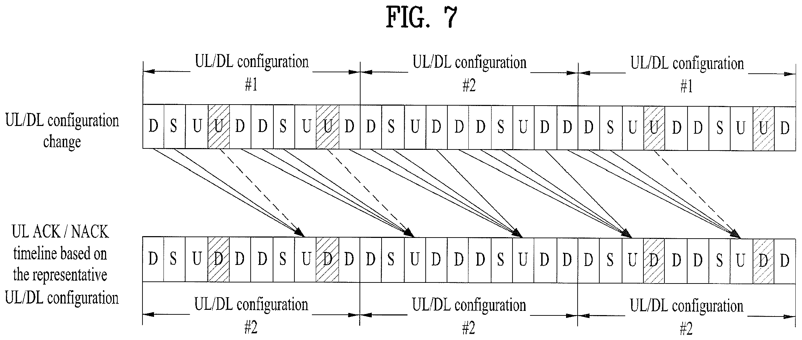

FIG. 7 is a diagram showing an uplink ACK/NACK transmission operation in an E-TDD system according to an embodiment of the present invention. In particular, in FIG. 7, assume that an eNB dynamically selects and uses one of uplink/downlink configuration #1 and uplink/downlink configuration #2 in a carrier.

Referring to FIG. 7, in uplink/downlink configuration #1 and uplink/downlink configuration #2, both of which are changeable uplink/downlink configurations, uplink/downlink configuration #2 is selected as a representative uplink/downlink configuration corresponding to the intersection of uplink subframes. Accordingly, the UE transmits uplink ACK/NACK according to uplink/downlink configuration. That is, uplink ACK/NACK is transmitted on subframes #2 and #7 which are uplink subframes in the representative uplink/downlink configuration.

In FIG. 7, uplink ACK/NACK for a PDSCH transmitted on a specific downlink subframe or a special subframe is transmitted on an uplink subframe connected by an arrow and a hatched subframe indicates mismatch between an uplink/downlink configuration actually managed by the eNB and a representative uplink/downlink configuration for uplink ACK/NACK.

In addition, a dotted arrow means a HARQ timeline in which uplink ACK/NACK need not be transmitted due to mismatch between an actual uplink/downlink configuration and a representative uplink/downlink configuration for uplink ACK/NACK.

The above-described principle of the present invention is also applicable to an operation for determining scheduling timing of a PUSCH. More specifically, a UE receives uplink grant or PHICH NACK on specific downlink subframe #n and then transmits a PUSCH on uplink subframe #n+k. At this time, a relationship between subframe #n and subframe #n+k is determined by an uplink/downlink configuration. In this case, if an E-TDD system operates in a specific component carrier, even when uplink grant is transmitted on subframe #n, if the UE recognizes subframe #n+k as a downlink subframe via system information, etc., subframe #n+k cannot be used to transmit a PUSCH.

If the principle of the present invention is applied under this situation, an uplink/downlink configuration, in which a subframe corresponding to a union of uplink subframes in all uplink/downlink configurations changeable by an E-TDD operation is configured as an uplink subframe, is configured as a representative uplink/downlink configuration and thus a transmission time of scheduling information (that is, uplink grant) of a PUSCH is determined.

Although an arbitrary uplink/downlink configuration among uplink/downlink configurations changeable by the E-TDD operation is selected as a representative uplink/downlink configuration, a PUSCH transmission time according to uplink grant is defined in the representative uplink/downlink configuration.

If an uplink/downlink configuration having an uplink subframe set accurately corresponding to the union of the uplink subframes is not present, an uplink/downlink configuration having least uplink subframes among uplink/downlink configurations having uplink subframes as a subset of the union may be selected as a representative uplink/downlink configuration.

By this method, if a representative uplink/downlink configuration is selected and is regarded as an uplink/downlink configuration of a component carrier used for an E-TDD operation to perform a HARQ operation, the HARQ operation can be effectively performed.

FIG. 8 is a diagram showing a PUSCH scheduling operation in an E-TDD system according to an embodiment of the present invention. In FIG. 8, assume that an eNB dynamically selects and uses one of uplink/downlink configuration #1 and uplink/downlink configuration #2 in a carrier.

Referring to FIG. 8, since uplink/downlink configuration #1 is configured as a representative uplink/downlink configuration corresponding to a union of the uplink subframes of uplink/downlink configurations #1 and #2, both of which are changeable uplink/downlink configurations, uplink grant and a PUSCH transmission time are defined.

In FIG. 8, a PUSCH for uplink grant transmitted on a specific downlink subframe or a special subframe is transmitted on a subframe connected by an arrow, a hatched subframe indicates mismatch between an uplink/downlink configuration actually managed by the eNB and a representative uplink/downlink configuration for processing a PUSCH transmission time. A dotted arrow means a HARQ timeline in which uplink grant need not be transmitted due to mismatch between an actual uplink/downlink configuration and a representative uplink/downlink configuration.

A similar principle is also applicable to an operation for receiving a PHICH or retransmission grant after PUSCH transmission. In this case, since it is important to always guarantee a transmission opportunity of a PHICH or retransmission grant upon an E-TDD operation, an uplink/downlink configuration, in which only subframes configured as downlink subframes (or special subframes) in all uplink/downlink configurations changeable by the E-TDD operation (that is, only subframes corresponding to the intersection of the downlink subframes of all uplink/downlink configurations) are configured as downlink subframes (or special subframes), is configured as a representative uplink/downlink configuration and a PHICH or retransmission grant is transmitted in the representative uplink/downlink configuration.

From the other viewpoint, an uplink/downlink configuration, in which subframes configured as uplink subframes (subframes corresponding to the union of uplink subframes of all changeable uplink/downlink configurations) even in any one of all uplink/downlink configurations changeable by the E-TDD operation are configured as uplink subframes, is configured as a representative uplink/downlink configuration and a PHICH or retransmission grant is transmitted on a downlink subframe determined according to the representative uplink/downlink configuration.

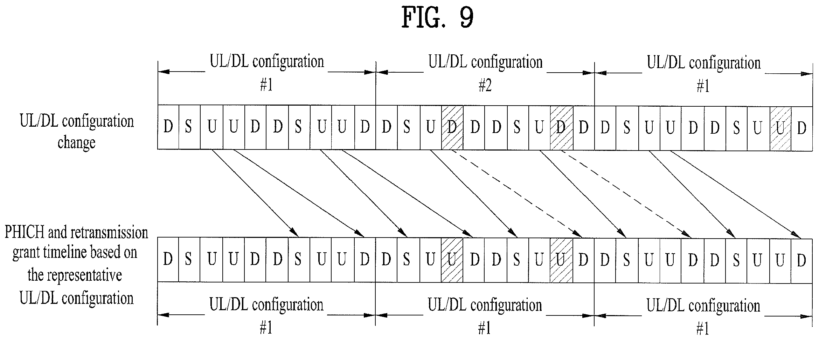

FIG. 9 is a diagram showing a transmission timeline of a PHICH or retransmission grant in an E-TDD system according to an embodiment of the present invention. In particular, in FIG. 9, the same situation as FIG. 8 is assumed.

In order to perform the above-described operation, the eNB may transmit, to the UE, a list of uplink/downlink configurations changeable in a specific component carrier using a system information signal such as SIB or a higher layer signal such as RRC.

Restrictions may be imposed on the eNB dynamically changing the uplink/downlink configuration. Although a legacy UE operates while regarding an uplink/downlink configuration transmitted on an SIB as being valid, if the eNB dynamically changes a subframe configured as a downlink subframe on the SIB to an uplink subframe, cell-specific reference signal (CRS) measurement of the legacy UE which expects transmission of a CRS in the subframe is severely distorted.

Accordingly, although the eNB changes the uplink/downlink configuration via dynamic signaling, changing the subframe configured as the uplink subframe on the SIB to the downlink subframe may be allowed but changing the subframe configured as the downlink subframe (or the special subframe) on the SIB to the uplink subframe may be disallowed. If such restrictions are applied, the uplink/downlink configuration set on the SIB may be regarded as an uplink/downlink configuration having maximum uplink subframes among the uplink/downlink configurations which may be configured by the eNB and may also be regarded as an uplink/downlink configuration corresponding to the union of uplink subframes on the uplink/downlink configuration which may be configured by the eNB.

Accordingly, according to the above-described principle of the present invention, in a state in which the eNB dynamically changes the uplink/downlink configuration, a HARQ timeline for uplink transmission of the UE, that is, an operation for receiving a PHICH or retransmission grant after PUSCH transmission or scheduling timing of a PUSCH, may be regarded as being equal to the operation according to the uplink/downlink configuration configured on the SIB.

In contrast, a HARQ timeline for downlink transmission of the UE, that is, transmission timing of uplink ACK/NACK for the PDSCH, preferably uses an uplink/downlink configuration other than the uplink/downlink configuration configured on the SIB. If the eNB configures a specific uplink/downlink configuration via a higher layer signal such as RRC and instructs that transmission timing of uplink ACK/NACK for the PDSCH be set according to a separate uplink/downlink configuration (that is, the eNB directly configures a representative uplink/downlink configuration for uplink ACK/NACK), this means that the separate uplink/downlink configuration is an uplink/downlink configuration having uplink subframes corresponding to the union of the uplink subframes of the uplink/downlink configurations selectable by the eNB.

Accordingly, the eNB may disallow a subframe configured as an uplink subframe in the separate uplink/downlink configuration to be configured as a downlink subframe and the UE may regard such configurations as errors. More specifically, the uplink/downlink configuration which may be configured by the eNB should satisfy the following conditions 1) to 3).
1) A subframe configured as a downlink subframe on an SIB should be a downlink subframe even in an uplink/downlink configuration used for actual data channel transmission and reception. Additionally, a subframe configured as a special subframe on an SIB may be restricted to a special subframe in an uplink/downlink configuration used for actual data channel transmission and reception. This is because the special subframe is also a region for transmitting a CRS and thus legacy UEs attempt CRS measurement suitable for the configuration of the special subframe.
2) On an uplink/downlink configuration indicated for a HARQ timeline for downlink transmission, a subframe configured as an uplink subframe should be an uplink subframe even in an uplink/downlink configuration used for actual data channel transmission and reception.
3) A subframe, which is configured as an uplink subframe on an SIB but is configured as a downlink subframe in a separate uplink/downlink configuration for a HARQ timeline for downlink transmission, may be configured as a downlink subframe or an uplink subframe in an uplink/downlink configuration used for actual data channel transmission and reception according to selection of the eNB.

A method of signaling an uplink/downlink configuration to be used at every point of time while satisfying conditions 1) to 3) will now be described. In particular, hereinafter, assume that an uplink/downlink configuration used for actual data channel transmission and reception and an uplink/downlink configuration indicated by an SIB are restricted to have the same special subframe location and, as a result, downlink-uplink switching periodicity may be determined by the uplink/downlink configuration on the SIB.

At this time, the uplink/downlink configurations are classified according to switching periodicity and are grouped as shown in Table 4 below if aligned according to the number of downlink subframes.

**Table 4**

| | 5ms Downlink-to-Uplink Switch-point periodicity | 10ms Downlink-to-Uplink Switch-point periodicity |
|---|---|---|
| Index #0 | U/D configuration #0 | U/D configuration #3 |
| Index #1 | U/D configuration #6 | U/D configuration #4 |
| Index #2 | U/D configuration #1 | U/D configuration #5 |
| Index #3 | U/D configuration #2 | |

Referring to Table 4, the eNB may inform the UE of the index of Table 4 above via a physical layer signal or a higher layer signal such as RRC or MAC to indicate an uplink/downlink configuration used for actual data channel transmission and reception.

A minimum value of an index signaled at this time may be set by the uplink/downlink configuration on the SIB. For example, if uplink/downlink configuration #6 is indicated on the SIB, the minimum index is #1 and index #0 may not be used.

A maximum value of a signaled index may be set by an uplink/downlink configuration indicated for a HARQ timeline for downlink transmission. For example, if an uplink/downlink configuration configured for a HARQ timeline for downlink transmission is uplink/downlink configuration #1, a maximum index is #2 and index #3 may not be used.

As a modification of this operation, the eNB may signal an offset value from a minimum index set by the uplink/downlink configuration on the SIB to indicate the uplink/downlink configuration used for actual data channel transmission and reception. For example, if uplink/downlink configuration #6 is indicated on the SIB, the minimum index is #1 and, if the eNB signals an index offset value 1, uplink/downlink configuration #1 corresponding to index #2 is an uplink/downlink configuration actually used at that time.

Of course, a range of a changeable uplink/downlink configuration may be given. That is, the range of the changeable uplink/downlink configuration may be given based on an uplink/downlink configuration indicated on the SIB.

If a carrier aggregation scheme is applied, a representative uplink/downlink configuration applicable to all aggregated component carriers needs to be defined. In such a representative uplink/downlink configuration, a representative uplink/downlink configuration applied to all component carriers may be selected by applying the above-described methods using representative uplink/downlink configurations of component carriers. In a component carrier to which E-TDD is not applied, since one uplink/downlink configuration may be present, this uplink/downlink configuration may be regarded as a representative uplink/downlink configuration of the component carrier. If the eNB directly designates a representative uplink/downlink configuration, more particularly, if the eNB sets a representative uplink/downlink configuration per component carrier for downlink HARQ and carriers having this representative uplink/downlink configurations are aggregated, the representative uplink/downlink configuration may be selected according to the method for setting a representative uplink/downlink subframe.

Alternatively, all changeable uplink/downlink subframe configurations may be listed per component carrier to define changeable uplink/downlink configurations on all component carriers and an uplink/downlink configuration representative of all component carriers may be selected by applying the above-described principle based on the changeable uplink/downlink configurations. If the eNB directly designates a representative uplink/downlink configuration, a representative uplink/downlink configuration to be used when all component carriers are aggregated for downlink HARQ may be particularly designated.

When a representative uplink/downlink configuration on all component carriers is selected, all component carriers may not considered but only component carriers, which directly participate in a HARQ operation, may be considered. For example, if a representative uplink/downlink configuration for uplink ACK/NACK is selected and uplink ACK/NACK is transmitted on PCell only, a representative uplink/downlink configuration for a carrier aggregation scheme may be selected in consideration of PCell, on which uplink ACK/NACK will be transmitted, (that is, a primary component carrier) and a scheduled cell on which a PDSCH is received (that is, a secondary component carrier).

Similarly, even when a representative uplink/downlink configuration for PUSCH scheduling timing or PHICH timing is selected, a representative uplink/downlink configuration of the carrier aggregation scheme may be selected in consideration of a cell, which transmits a PUSCH, and a cell, which receives uplink grant or a PHICH.

If uplink HARQ is performed according to the uplink/downlink configuration on the SIB, the representative uplink/downlink configuration for uplink HARQ may correspond to an uplink/downlink configuration configured on a system information message of a component carrier scheduling uplink of the component carrier.

Hereinafter, another detailed method for configuring a representative uplink/downlink configuration will be described. Hereinafter, for convenience of description, a component carrier used to perform an E-TDD operation is denoted by CC #X and an uplink/downlink configuration for the CC #X set via the SIB is denoted by uplink/downlink configuration #X. In addition, the below-described operation of the present invention is applicable to the case in which an eNB performs an E-TDD operation on one CC (e.g., SCell) if a carrier aggregation scheme is applied and is also applicable to the case in which an E-TDD operation is performed on a single component carrier without applying a carrier aggregation scheme.
(a) As a first method, if the range of a changeable uplink/downlink configuration is predefined with respect to CC #X on which the E-TDD operation is performed, a representative uplink/downlink configuration for uplink ACK/NACK transmission of CC #X may be regarded as uplink/downlink configuration #X and uplink ACK/NACK transmission may be performed according to an uplink ACK/NACK transmission timeline of uplink/downlink configuration #X.
(b) As a second method, if the range of a changeable uplink/downlink configuration is predefined with respect to CC #X used to perform the E-TDD operation, a PUSCH transmission (or PUSCH retransmission) timeline of CC #X may be defined by a relationship between uplink/downlink configuration #X and specific uplink/downlink configuration #Y including subframes corresponding to the union of uplink subframes in uplink/downlink configurations excluding uplink/downlink configuration #X.
   For example, if an uplink subframe set of uplink/downlink configuration #X includes an uplink subframe set of uplink/downlink configuration #Y, a representative uplink/downlink configuration set for PUSCH transmission (or PUSCH retransmission) on CC #X may be regarded as uplink/downlink configuration #X and PUSCH transmission (or PUSCH retransmission) may be performed according to a timeline of uplink/downlink configuration #X.
   In contrast, if an uplink subframe set of uplink/downlink configuration #X does not include an uplink subframe set of uplink/downlink configuration #Y, a representative uplink/downlink configuration set for PUSCH transmission (or PUSCH retransmission) on CC #X may be regarded as uplink/downlink configuration #Y and PUSCH transmission (or PUSCH retransmission) may be performed according to a timeline of uplink/downlink configuration #Y.
(c) As a third method, assume that CC #X used to perform the E-TDD operation is configured to be subjected to cross carrier scheduling (CCS) from other predefined component carriers. In this state, by a relationship between a representative uplink/downlink configuration of a scheduling component carrier scheduling CC #X and a representative uplink/downlink configuration of CC #X, a timeline for uplink ACK/NACK transmission or PUSCH transmission (or PUSCH retransmission) of CC #X (that is, a final representative uplink/downlink configuration) may be defined. Of course, if a scheduling component carrier such as PCell is not used to perform the E-TDD operation, the uplink/downlink configuration configured via the SIB may be a representative uplink/downlink configuration of the scheduling component carrier.
   For example, from the viewpoint of the representative uplink/downlink configuration for uplink ACK/NACK transmission, a final representative uplink/downlink configuration configured for uplink ACK/NACK transmission on CC #X may be regarded as a representative uplink/downlink configuration of the scheduling component carrier. In this case, uplink ACK/NACK transmission on CC #X may be performed according to an uplink ACK/NACK transmission timeline of the regarded final representative uplink/downlink configuration.
   Similarly, from the viewpoint of the representative uplink/downlink configuration for PUSCH transmission (or PUSCH retransmission), if an uplink subframe set of a representative uplink/downlink configuration of a scheduling component carrier includes an uplink subframe set of a representative uplink/downlink configuration of CC #X, a final representative uplink/downlink configuration set for PUSCH transmission (or PUSCH retransmission) on CC #X may be regarded as a representative uplink/downlink configuration of the scheduling component carrier and, in this case, PUSCH transmission (or PUSCH retransmission) may be performed according to a timeline of the regarded final representative uplink/downlink configuration.
   In contrast, in a state in which the uplink subframe set of the representative uplink/downlink configuration of the scheduling component carrier does not include the uplink subframe set of the representative uplink/downlink configuration of CC #X, the final representative uplink/downlink configuration set for PUSCH transmission (or PUSCH retransmission) on CC #X may be regarded as a representative uplink/downlink configuration of CC #X and PUSCH transmission (or PUSCH retransmission) may be performed according to a timeline of the regarded final representative uplink/downlink configuration.
(d) As a fourth method, if CC #X used to perform the E-TDD operation operates using a self-scheduling scheme, a rule may be decided such that a timeline for uplink ACK/NACK transmission or PUSCH transmission (or PUSCH retransmission) on CC #X is defined using the first or second method.
(e) As a fifth method, assume that CC #X is used for E-TDD and CC #X is configured to be subjected to cross carrier scheduling from other component carriers. In this case, a (downlink) subframe, in which PDSCH scheduling based on cross carrier scheduling is possible on CC #X from the scheduling component carrier, may be restricted to a subframe configured as a downlink subframe in the representative uplink/downlink configuration of CC #X and the representative uplink/downlink configuration of the scheduling component carrier. Of course if the scheduling component carrier such as PCell is not used to perform the E-TDD operation, the uplink/downlink configuration configured set via the SIB may be configured as a representative uplink/downlink configuration of the scheduling component carrier.

Alternatively, (downlink) subframes in which PDSCH scheduling based on cross carrier scheduling is possible on CC #X from the scheduling component carrier may be restricted to subframes simultaneously satisfying conditions that both the representative uplink/downlink configuration of the scheduling component carrier and the representative uplink/downlink configuration of CC #X are configured to be used for downlink and are downlink subframes in which the uplink ACK/NACK transmission time based on the final representative uplink/downlink configuration for uplink ACK/NACK transmission on CC #X derived using the third method is defined.

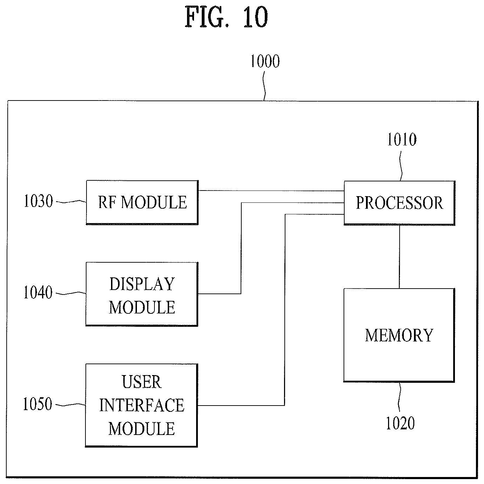

FIG. 10 is a block diagram of a communication apparatus according to one embodiment of the present invention.

Referring to FIG. 10, a communication apparatus 1000 includes a processor 1010, a memory 1020, a Radio Frequency (RF) module 1030, a display module 1040 and a user interface module 1050.

The communication apparatus 1000 is shown for convenience of description and some modules thereof may be omitted. In addition, the communication apparatus 1000 may further include necessary modules. In addition, some modules of the communication apparatus 1000 may be subdivided. The processor 1010 is configured to perform an operation of the embodiment of the present invention described with reference to the drawings. For a detailed description of the operation of the processor 1010, reference may be made to the description associated with FIGs. 1 to 9.

The memory 1020 is connected to the processor 1010 so as to store an operating system, an application, program code, data and the like. The RF module 1030 is connected to the processor 1010 so as to perform a function for converting a baseband signal into a radio signal or converting a radio signal into a baseband signal. The RF module 1030 performs analog conversion, amplification, filtering and frequency up-conversion or inverse processes thereof. The display module 1040 is connected to the processor 1010 so as to display a variety of information. As the display module 1040, although not limited thereto, a well-known device such as a Liquid Crystal Display (LCD), a Light Emitting Diode (LED), or an Organic Light Emitting Diode (OLED) may be used. The user interface module 1050 is connected to the processor 1010 and may be configured by a combination of well-known user interfaces such as a keypad and a touch screen.

The above-described embodiments are proposed by combining constituent components and characteristics of the present invention according to a predetermined format. The individual constituent components or characteristics should be considered optional on the condition that there is no additional remark. If required, the individual constituent components or characteristics may not be combined with other components or characteristics. In addition, some constituent components and/or characteristics may be combined to implement the embodiments of the present invention. The order of operations disclosed in the embodiments of the present invention may be changed. Some components or characteristics of any embodiment may also be included in other embodiments, or may be replaced with those of the other embodiments as necessary. Moreover, it will be apparent that some claims referring to specific claims may be combined with other claims referring to the other claims other than the specific claims to constitute the embodiment or add new claims by means of amendment after the application is filed.

The embodiments of the present invention can be implemented by a variety of means, for example, hardware, firmware, software, or a combination thereof. In the case of implementing the present invention by hardware, the present invention can be implemented through application specific integrated circuits (ASICs), digital signal processors (DSPs), digital signal processing devices (DSPDs), programmable logic devices (PLDs), field programmable gate arrays (FPGAs), a processor, a controller, a microcontroller, a microprocessor, etc.

If operations or functions of the present invention are implemented by firmware or software, the present invention can be implemented in the form of a variety of formats, for example, modules, procedures, functions, etc. The software code may be stored in a memory unit so as to be driven by a processor. The memory unit may be located inside or outside of the processor, so that it can communicate with the aforementioned processor via a variety of well-known parts.

### [Industrial Applicability]

Although an example in which a method for performing hybrid automatic repeat and request (HARQ) for dynamic resource change of radio resources in a wireless communication system and an apparatus therefor is applied to a 3GPP LTE system is described, the present invention is applicable to various wireless communication systems in addition to the 3GPP LTE system.

## Claims

1. A method for transmitting and receiving signals at a user equipment in a time division duplex communication system, the method comprising:
configuring a default reference uplink/downlink configuration from a plurality of uplink/downlink configurations via system information;
configuring a HARQ, Hybrid Automatic Repeat and reQuest, reference uplink/downlink configuration from the plurality of uplink/downlink configurations by a RRC, Radio Resource Control, layer;
receiving, via a physical layer from a base station, a physical layer control signal indicating a specific uplink/downlink configuration among the plurality of uplink/downlink configurations, during transmitting and receiving physical layer data signals based on the default reference uplink/downlink configuration; and
transmitting and receiving the physical layer data signals based on the specific uplink/downlink configuration, after receiving the physical layer control signal,
wherein, if a first subframe is indicated as a downlink subframe in the default reference uplink/downlink configuration, the first subframe is not indicated as an uplink subframe in the specific uplink/downlink configuration,
wherein, if a second subframe is indicated as an uplink subframe in the HARQ reference uplink/downlink configuration, the second subframe is not indicated as a downlink subframe in the specific uplink/downlink configuration.

2. The method according to claim 1, wherein one or more downlink subframes indicated by the specific uplink/downlink configuration are a subset of downlink subframes indicated by the HARQ reference uplink/downlink configuration.

3. The method according to claim 1, wherein the HARQ reference uplink/downlink configuration has a maximum number of downlink subframes among the plurality of uplink/downlink configurations.

4. The method according to claim 1, wherein transmitting and receiving the physical layer data signals comprises:
transmitting an acknowledgement/negative acknowledgement response for at least one downlink data signal, on the uplink subframe indicated by the specific uplink/downlink configuration,
wherein the downlink subframe, on which the at least one downlink data signal is received, is indicated by the HARQ reference uplink/downlink configuration.

5. The method according to claim 1, wherein the HARQ reference uplink/downlink configuration indicates at least one downlink subframe corresponding to an acknowledgement/negative acknowledgement response which is transmitted on the uplink subframe indicated by the specific uplink/downlink configuration.

6. A user equipment apparatus in a time division duplex communication system, the apparatus comprising:
a wireless communication module configured to transmit and receive signals with a base station; and
a processor configured to process the signals,
wherein the processor configures a default reference uplink/downlink configuration from a plurality of uplink/downlink configurations via system information and configures a HARQ, Hybrid Automatic Repeat and reQuest, reference uplink/downlink configuration from the plurality of uplink/downlink configurations by a RRC, Radio Resource Control, layer, and
wherein the processor controls the wireless communication module to receive a physical layer control signal indicating a specific uplink/downlink configuration among the plurality of uplink/downlink configurations via a physical layer from a base station during transmitting and receiving physical layer data signals based on the default reference uplink/downlink configuration, and to transmit and receive the physical layer data signals based on the specific uplink/downlink configuration after receiving the physical layer control signal,
wherein, if a first subframe is indicated as a downlink subframe in the default reference uplink/downlink configuration, the first subframe is not indicated as an uplink subframe in the specific uplink/downlink configuration,
wherein, if a second subframe is indicated as an uplink subframe in the HARQ reference uplink/downlink configuration, the second subframe is not indicated as a downlink subframe in the specific uplink/downlink configuration.

7. The apparatus according to claim 6, wherein one or more downlink subframes indicated by the specific uplink/downlink configuration are a subset of downlink subframes indicated by the HARQ reference uplink/downlink configuration.

8. The apparatus according to claim 6, wherein the HARQ reference uplink/downlink configuration has a maximum number of downlink subframes among the plurality of uplink/downlink configurations.

9. The apparatus according to claim 6, wherein the processor controls the wireless communication module to transmit an acknowledgement/negative acknowledgement response for at least one downlink data signal, on the uplink subframe indicated by the specific uplink/downlink configuration,
wherein the downlink subframe, on which the at least one downlink data signal is received, is indicated by the HARQ reference uplink/downlink configuration.

10. The apparatus according to claim 6, wherein the HARQ reference uplink/downlink configuration indicates at least one downlink subframe corresponding to an acknowledgement/negative acknowledgement response which is transmitted on the uplink subframe indicated by the specific uplink/downlink configuration.

## Patentansprüche

1. Verfahren zum Übertragen und Empfangen von Signalen an einem Benutzerendgerät in einem Zeitduplex-Kommunikationssystem, wobei das Verfahren umfasst:
Konfigurieren einer Standard-Referenz-Uplink/Downlink-Konfiguration aus einer Mehrzahl von Uplink/Downlink-Konfigurationen über Systeminformation;
Konfigurieren einer HARQ-, Hybrid Automatic Repeat and reQuest-, Referenz-Uplink/Downlink-Konfiguration aus der Mehrzahl von Uplink/Downlink-Konfigurationen durch eine RRC-, Radio Resource Control-, Schicht;
Empfangen, über eine Bitübertragungsschicht von einer Basisstation, eines Bitübertragungsschicht-Steuersignals, das eine spezifische Uplink/Downlink-Konfiguration aus der Mehrzahl von Uplink/Downlink-Konfigurationen angibt, während des Übertragens und Empfangens von Bitübertragungsschicht-Datensignalen basierend auf der Standard-Referenz-Uplink/Downlink-Konfiguration; und
Übertragen und Empfangen der Bitübertragungsschicht-Datensignalen basierend auf der spezifischen Uplink/Downlink-Konfiguration, nach Empfangen des Bitübertragungsschicht-Steuersignals,
wobei, falls ein erster Unterrahmen als ein Downlink-Unterrahmen in der Standard-Referenz-Uplink/Downlink-Konfiguration angegeben wird, der erste Unterrahmen nicht als ein Uplink-Unterrahmen in der spezifischen Uplink/Downlink-Konfiguration angegeben wird,
wobei, falls ein zweiter Unterrahmen als ein Uplink-Unterrahmen in der HARQ-Referenz-Uplink/Downlink-Konfiguration angegeben wird, der zweite Unterrahmen nicht als ein Downlink-Unterrahmen in der spezifischen Uplink/Downlink-Konfiguration angegeben wird.

2. Verfahren nach Anspruch 1, wobei ein oder mehrere Downlink-Unterrahmen, die durch die spezifische Uplink/Downlink-Konfiguration angegeben werden, eine Teilmenge von Downlink-Unterrahmen sind, die durch die HARQ-Referenz-Uplink/Downlink-Konfiguration angegeben werden.

3. Verfahren nach Anspruch 1, wobei die HARQ-Referenz-Uplink/Downlink-Konfiguration eine maximale Anzahl von Downlink-Unterrahmen aus der Mehrzahl von Uplink/Downlink-Konfigurationen aufweist.

4. Verfahren nach Anspruch 1, wobei das Übertragen und Empfangen der Bitübertragungsschicht-Datensignale umfasst:
Übertragen einer Bestätigungs-/Negativ-Bestätigungs-Antwort für mindestens ein Downlink-Datensignal auf dem Uplink-Unterrahmen, der durch die spezifische Uplink/Downlink-Konfiguration angegeben wird,
wobei der Downlink-Unterrahmen, auf dem das mindestens eine Downlink-Datensignal empfangen wird, durch die HARQ-Referenz-Uplink/Downlink-Konfiguration angegeben wird.

5. Verfahren nach Anspruch 1, wobei die HARQ-Referenz-Uplink/Downlink-Konfiguration mindestens einen Downlink-Unterrahmen angibt, der einer Bestätigungs-/Negativ-Bestätigungs-Antwort entspricht, die auf dem Uplink-Unterrahmen übertragen wird, der durch die spezifische Uplink/Downlink-Konfiguration angegeben wird.

6. Benutzerendgerät-Vorrichtung in einem Zeitduplex-Kommunikationssystem, wobei die Vorrichtung umfasst:
ein Modul zur drahtlosen Kommunikation, das konfiguriert ist zum Übertragen und Empfangen von Signalen mit einer Basisstation; und
einen Prozessor, der konfiguriert ist, um die Signale zu verarbeiten,
wobei der Prozessor eine Standard-Referenz-Uplink/Downlink-Konfiguration aus einer Mehrzahl von Uplink/Downlink-Konfigurationen über Systeminformation konfiguriert und eine HARQ-, Hybrid Automatic Repeat and reQuest-, Referenz-Uplink/Downlink-Konfiguration aus der Mehrzahl von Uplink/Downlink-Konfigurationen durch eine RRC-, Radio Resource Control-, Schicht konfiguriert;
wobei der Prozessor das Modul zur drahtlosen Kommunikation steuert, zum Empfangen eines Bitübertragungsschicht-Steuersignals, das eine spezifische Uplink/Downlink-Konfiguration aus der Mehrzahl von Uplink/Downlink-Konfigurationen angibt, über eine Bitübertragungsschicht von einer Basisstation während des Übertragens und Empfangens von Bitübertragungsschicht-Datensignalen basierend auf der Standard-Referenz-Uplink/Downlink-Konfiguration, und zum Übertragen und Empfangen der Bitübertragungsschicht-Datensignalen basierend auf der spezifischen Uplink/Downlink-Konfiguration, nach Empfangen des Bitübertragungsschicht-Steuersignals,
wobei, falls ein erster Unterrahmen als ein Downlink-Unterrahmen in der Standard-Referenz-Uplink/Downlink-Konfiguration angegeben wird, der erste Unterrahmen nicht als ein Uplink-Unterrahmen in der spezifischen Uplink/Downlink-Konfiguration angegeben wird,
wobei, falls ein zweiter Unterrahmen als ein Uplink-Unterrahmen in der HARQ-Referenz-Uplink/Downlink-Konfiguration angegeben wird, der zweite Unterrahmen nicht als ein Downlink-Unterrahmen in der spezifischen Uplink/Downlink-Konfiguration angegeben wird.

7. Vorrichtung nach Anspruch 6, wobei ein oder mehrere Downlink-Unterrahmen, die durch die spezifische Uplink/Downlink-Konfiguration angegeben werden, eine Teilmenge von Downlink-Unterrahmen sind, die durch die HARQ-Referenz-Uplink/Downlink-Konfiguration angegeben werden.

8. Vorrichtung nach Anspruch 6, wobei die HARQ-Referenz-Uplink/Downlink-Konfiguration eine maximale Anzahl von Downlink-Unterrahmen aus der Mehrzahl von Uplink/Downlink-Konfigurationen aufweist.

9. Vorrichtung nach Anspruch 6, wobei der Prozessor das Modul zur drahtlosen Kommunikation steuert, um eine Bestätigungs-/Negativ-Bestätigungs-Antwort für mindestens ein Downlink-Datensignal auf dem Uplink-Unterrahmen zu übertragen, der durch die spezifische Uplink/Downlink-Konfiguration angegeben wird,
wobei der Downlink-Unterrahmen, auf dem das mindestens eine Downlink-Datensignal empfangen wird, durch die HARQ-Referenz-Uplink/Downlink-Konfiguration angegeben wird

10. Vorrichtung nach Anspruch 6, wobei die HARQ-Referenz-Uplink/Downlink-Konfiguration mindestens einen Downlink-Unterrahmen angibt, der einer Bestätigungs-/Negativ-Bestätigungs-Antwort entspricht, die auf dem Uplink-Unterrahmen übertragen wird, der durch die spezifische Uplink/Downlink-Konfiguration angegeben wird.

## Revendications

1. Procédé de transmission et de réception de signaux au niveau d'un équipement utilisateur dans un système de communication à duplexage par répartition dans le temps, le procédé comprenant :
la configuration d'une configuration de liaison montante/liaison descendante de référence par défaut parmi une pluralité de configurations de liaison montante/liaison descendante par l'intermédiaire d'informations système ;
la configuration d'une configuration de liaison montante/liaison descendante de référence HARQ, demande automatique de répétition hybride, parmi la pluralité de configurations de liaison montante/liaison descendante par une couche RRC, contrôle de ressources radio ;
la réception, par l'intermédiaire d'une couche physique depuis une station de base, d'un signal de contrôle de couche physique indiquant une configuration de liaison montante/liaison descendante spécifique parmi la pluralité de configurations de liaison montante/liaison descendante, lors de la transmission et de la réception de signaux de données de couche physique sur la base de la configuration de liaison montante/liaison descendante de référence par défaut ; et
la transmission et la réception des signaux de données de couche physique sur la base de la configuration de liaison montante/liaison descendante spécifique, après réception du signal de contrôle de couche physique,
dans lequel, si une première sous-trame est indiquée comme une sous-trame en liaison descendante dans la configuration de liaison montante/liaison descendante de référence par défaut, la première sous-trame n'est pas indiquée comme une sous-trame en liaison montante dans la configuration de liaison montante/liaison descendante spécifique,
dans lequel, si une deuxième sous-trame est indiquée comme une sous-trame en liaison montante dans la configuration de liaison montante/liaison descendante de référence HARQ, la deuxième sous-trame n'est pas indiquée comme une sous-trame en liaison descendante dans la configuration de liaison montante/liaison descendante spécifique.

2. Procédé selon la revendication 1, dans lequel une ou plusieurs sous-trames en liaison descendante indiquées par la configuration de liaison montante/liaison descendante spécifique sont un sous-ensemble de sous-trames en liaison descendante indiquées par la configuration de liaison montante/liaison descendante de référence HARQ.

3. Procédé selon la revendication 1, dans lequel la configuration de liaison montante/liaison descendante de référence HARQ a un nombre maximum de sous-trames en liaison descendante parmi la pluralité de configurations de liaison montante/liaison descendante.

4. Procédé selon la revendication 1, dans lequel la transmission et la réception des signaux de données de couche physique comprennent :
la transmission d'une réponse d'accusé de réception/accusé de réception négatif pour au moins un signal de données en liaison descendante, sur la sous-trame en liaison montante indiquée par la configuration de liaison montante/liaison descendante spécifique,
dans lequel la sous-trame en liaison descendante, sur laquelle l'au moins un signal de données en liaison descendante est reçu, est indiquée par la configuration de liaison montante/liaison descendante de référence HARQ.

5. Procédé selon la revendication 1, dans lequel la configuration de liaison montante/liaison descendante de référence HARQ indique au moins une sous-trame en liaison descendante correspondant à une réponse d'accusé de réception/accusé de réception négatif qui est transmise sur la sous-trame en liaison montante indiquée par la configuration de liaison montante/liaison descendante spécifique.

6. Appareil d'équipement utilisateur dans un système de communication à duplexage par répartition dans le temps, l'appareil comprenant :
un module de communication sans fil configuré pour transmettre et recevoir des signaux avec une station de base; et
un processeur configuré pour traiter les signaux,
dans lequel le processeur configure une configuration de liaison montante/liaison descendante de référence par défaut parmi une pluralité de configurations de liaison montante/liaison descendante par l'intermédiaire d'informations système et configure une configuration de liaison montante/liaison descendante de référence HARQ parmi la pluralité de configurations de liaison montante/liaison descendante par une couche RRC, contrôle de ressources radio, et
dans lequel le processeur commande le module de communication sans fil pour recevoir un signal de contrôle de couche physique indiquant une configuration de liaison montante/liaison descendante spécifique parmi la pluralité de configurations de liaison montante/liaison descendante par l'intermédiaire d'une couche physique depuis une station de base lors de la transmission et de la réception de signaux de données de couche physique sur la base de la configuration de liaison montante/liaison descendante de référence par défaut, et pour transmettre et recevoir les signaux de données de couche physique sur la base de la configuration de liaison montante/liaison descendante spécifique après réception du signal de contrôle de couche physique,
dans lequel, si une première sous-trame est indiquée comme une sous-trame en liaison descendante dans la configuration de liaison montante/liaison descendante de référence par défaut, la première sous-trame n'est pas indiquée comme une sous-trame en liaison montante dans la configuration de liaison montante/liaison descendante spécifique,
dans lequel, si une deuxième sous-trame est indiquée comme une sous-trame en liaison montante dans la configuration de liaison montante/liaison descendante de référence HARQ, la deuxième sous-trame n'est pas indiquée comme une sous-trame en liaison descendante dans la configuration de liaison montante/liaison descendante spécifique.

7. Procédé selon la revendication 6, dans lequel une ou plusieurs sous-trames en liaison descendante indiquées par la configuration de liaison montante/liaison descendante spécifique sont un sous-ensemble de sous-trames en liaison descendante indiquées par la configuration de liaison montante/liaison descendante de référence HARQ.

8. Procédé selon la revendication 6, dans lequel la configuration de liaison montante/liaison descendante de référence HARQ a un nombre maximum de sous-trames en liaison descendante parmi la pluralité de configurations de liaison montante/liaison descendante.

9. Procédé selon la revendication 6, dans lequel le processeur commande le module de communication sans fil pour transmettre une réponse d'accusé de réception/accusé de réception négatif pour au moins un signal de données en liaison descendante, sur la sous-trame en liaison montante indiquée par la configuration de liaison montante/liaison descendante spécifique,
dans lequel la sous-trame en liaison descendante, sur laquelle l'au moins un signal de données en liaison descendante est reçu, est indiquée par la configuration de liaison montante/liaison descendante de référence HARQ.

10. Procédé selon la revendication 6, dans lequel la configuration de liaison montante/liaison descendante de référence HARQ indique au moins une sous-trame en liaison descendante correspondant à une réponse d'accusé de réception/accusé de réception négatif qui est transmise sur la sous-trame en liaison montante indiquée par la configuration de liaison montante/liaison descendante spécifique.
